# EUROPÄISCHE PATENTANMELDUNG

(11) **EP 1 905 307 A2**
(43) Veröffentlichungstag der Anmeldung: **02.04.2008**
(21) Anmeldenummer: 07017693.8
(22) Anmeldetag: 11.09.2007
(51) Int. Cl.: A21C 3/02

(54) **Vorrichtung zur Erzeugung und Bereitstellung eines kontinuierlichen Teigbandes**

(30) Priorität: 29.09.2006 DE 102006046505
(71) Anmelder: Werner & Pfleiderer Lebensmitteltechnik GmbH, 91550 Dinkelsbühl (DE)
(72) Erfinder: Fiedler, Rudolf, 91731 Langfurth (DE); Mülders, Herbert, 52222 Stolberg (DE)
(74) Vertreter: Hofmann, Matthias

(57) **Zusammenfassung**

Eine Vorrichtung, mit der ein kontinuierliches Teigband erzeugt wird, hat eine Portioniereinrichtung (5) zum Portionieren einer Teigmasse in separate Teigportionen. Die Vorrichtung (1) hat ferner eine Anschluss-Fördereinrichtung (10), die die von einer Zuführ-Fördereinrichtung (6) zugeführten Teigportionen (26) zumindest einer nachfolgenden Teigbearbeitungsstation (11, 18) zuführt. Zum Messen eines Teigflusses auf der Zuführ-Fördereinrichtung (6) dient eine Messeinrichtung (9). Eine Steuer-/Regeleinrichtung (8) arbeitet mit einem Förderantrieb (7) der Zuführ-Fördereinrichtung (6) zum Regeln einer Fördergeschwindigkeit der Zuführ-Fördereinrichtung (6) derart zusammen, dass an die Anschluss-Fördereinrichtung (10) ein Ist-Teigfluss abgegeben wird, der von einem Soll-Teigfluss nicht mehr als ein Vorgabewert abweicht. Zum Vordrücken der geregelt geförderten Teigportionen zur Herstellung eines Roh-Teigbandes dient eine Vordrückeinrichtung (11). Zum Andrücken des vorgedrückten Roh-Teigbandes zur Erzeugung des kontinuierlichen Teigbandes dient eine Hauptandrückeinrichtung (18). Es resultieren eine Teigbanderzeugungsvorrichtung und ein hiermit durchführbares Verfahren, mit denen auch aus empfindlichen Teigen kontinuierliche Teigbänder hoher Qualität geformt werden können.

## Beschreibung

Die Erfindung betrifft ein Verfahren und eine Vorrichtung zur Erzeugung eines kontinuierlichen Teigbandes.

Teigbanderzeugungsvorrichtungen sind durch offenkundige Vorbenutzung bekannt. Derartige bekannte Teigbanderzeugungsvorrichtungen haben unterschiedlich schnell laufende Walzenpaare, die zwischen sich ein Teigband formen und fördern. Durch den Verdichtungsprozess der Einführ- und Austragswalzen der bekannten Teigbanderzeugungsvorrichtungen wird das erzeugte Teigband stark belastet, bevor es weiterverarbeitet wird. Insbesondere werden bei der Teigbanderzeugung mit den bekannten Teigbanderzeugungsvorrichtungen Gärblasen zerstört, was die Qualität des Teigs beeinträchtigt.

Es ist daher eine Aufgabe der vorliegenden Erfindung, eine Teigbanderzeugungsvorrichtung der eingangs genannten Art sowie ein Teigbanderzeugungsverfahren derart weiterzubilden, dass auch aus empfindlichen Teigen kontinuierliche Teigbänder hoher Qualität geformt werden können.

Diese Aufgabe ist erfindungsgemäß gelöst durch ein Verfahren mit den im Anspruch 1 angegeben Merkmalen sowie durch eine Vorrichtung mit den im Anspruch 5 angegebenen Merkmalen.

Die Teigflussregelung stellt sicher, dass das erzeugte Teigband eine konstante Dichte und Stärke aufweist. Durch die Vordrück- und die Hauptandrückeinrichtung erfolgt eine schonende Teigbandformung, ohne dass hierbei Gärblasen unerwünscht zerstört werden.

Ein Messen nach Anspruch 2 führt zu einer sehr genauen Teigflussbestimmung. Alternativ ist zur Teigflussbestimmung auch eine Gewichtsmessung des Teiges auf der Zuführ-Fördereinrichtung möglich.

Eine berührungslose Messung nach Anspruch 3 ist besonders schonend für den Teig. Eine solche Messung kann insbesondere optisch erfolgen.

Ein Andrücken nach Anspruch 4 ist besonders schonend. Es können auch mehr als zwei Andrückstufen mit einer entsprechend höheren Anzahl von Relaxationen zwischen diesen vorgesehen sein.

Die Vorteile einer Vorrichtung nach den Ansprüchen 6, 7 und 12 entsprechen denen, die vorstehend in Zusammenhang mit den Ansprüchen 2 bis 4 erwähnt wurden.

Eine Vordrückrolle nach Anspruch 8 erlaubt ein in seiner Intensität exakt vorgebbares Vordrücken des Teiges. Als Gegenkörper wird insbesondere ein unterstütztes Förderband der Anschluss-Fördereinrichtung eingesetzt. Die Vordrückrolle ist insbesondere angetrieben, wobei bevorzugt durch eine vorgebbare Relation zwischen der Rotationsgeschwindigkeit der Vordrückrolle und der Fördergeschwindigkeit der Anschluss-Fördereinrichtung eine gezielte Stauchung bzw. Streckung des Roh-Teigbandes erzeugt werden kann.

Eine Vordrückrolle nach Anspruch 9 begünstigt den Teigfluss des Roh-Teigbandes hin zu den Rändern einer Teig-Förderbahn der Vorrichtung.

Erstreckungsverhältnisse nach Anspruch 10 haben sich für die Förderung eines Flusses des Roh-Teigbandes nach außen als besonders günstig herausgestellt.

Dies gilt entsprechend für Dickenverhältnisse nach Anspruch 11.

Oberbänder nach Anspruch 13 ermöglichen ein schonendes und gezielt steuerbares Andrücken des Roh-Teigbandes über eine durch die Oberbandlänge vorgegebene Förderstrecke. Über die Fördergeschwindigkeit des Oberbandes relativ zur Fördergeschwindigkeit der Anschluss-Fördereinrichtung kann auch hier eine gezielte Streckung bzw. Stauchung des Roh-Teigbandes herbeigeführt werden.

Schwenkbare Oberbänder nach Anspruch 14 lassen sich an die Unebenheiten des anzudrückenden Roh-Teigbandes anpassen.

Seitliche Führungsschienen nach Anspruch 15 verhindern ein unerwünschtes seitliches Abfließen des erzeugten Teigbandes. Die Führungsschienen können mit der Anschluss-Fördereinrichtung mitlaufen oder stationär an einem Halterahmen der Vorrichtung angebracht sein.

Ein Ausführungsbeispiel der Erfindung wird nachfolgend anhand der Zeichnung näher erläutert. In dieser zeigen:
- Fig. 1: perspektivisch eine Vorrichtung zur Erzeugung eines kontinuierlichen Teigbandes;
- Fig. 2: einen vertikalen, die Teig-Förderrichtung enthaltenden Längsschnitt durch die Vorrichtung nach Fig. 1;
- Fig. 3: vergrößert eine Stirnansicht einer Teig-Vordrückrolle der Vorrichtung nach Fig. 1;
- Fig. 4: einen Längsschnitt gemäß Linie IV-IV in Fig. 3; und
- Fig. 5 bis 7: schematisch Momentaufnahmen bei der Teigbanderzeugung in der Vorrichtung nach Fig. 1 im Bereich einer Teigfluss-Messung, im Bereich der Vordrückrolle und im Bereich einer zwei Hauptandrückeinheiten umfassenden Teig-Hauptandrückeinrichtung.

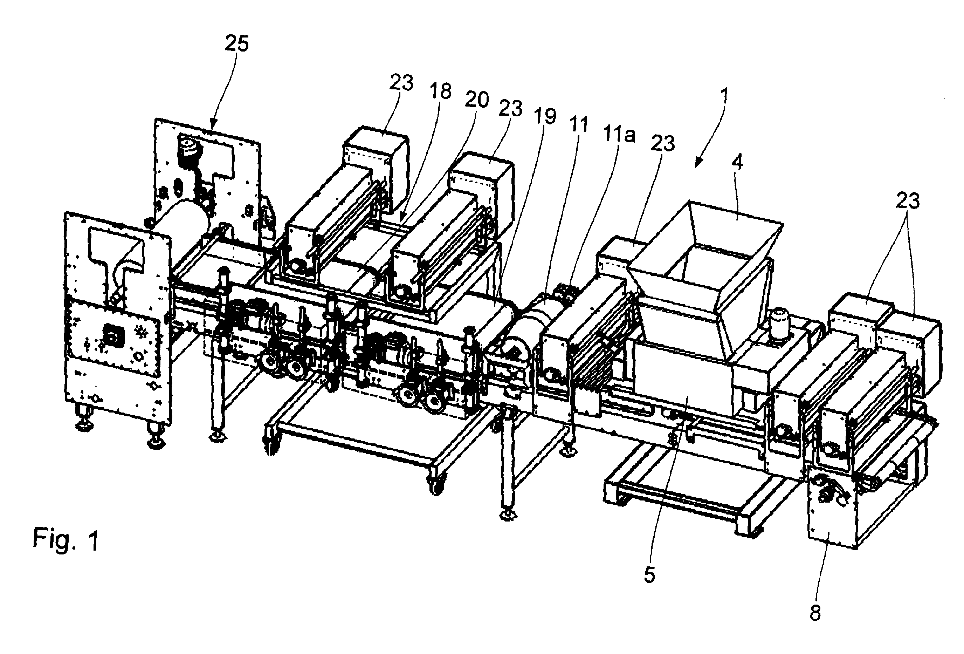

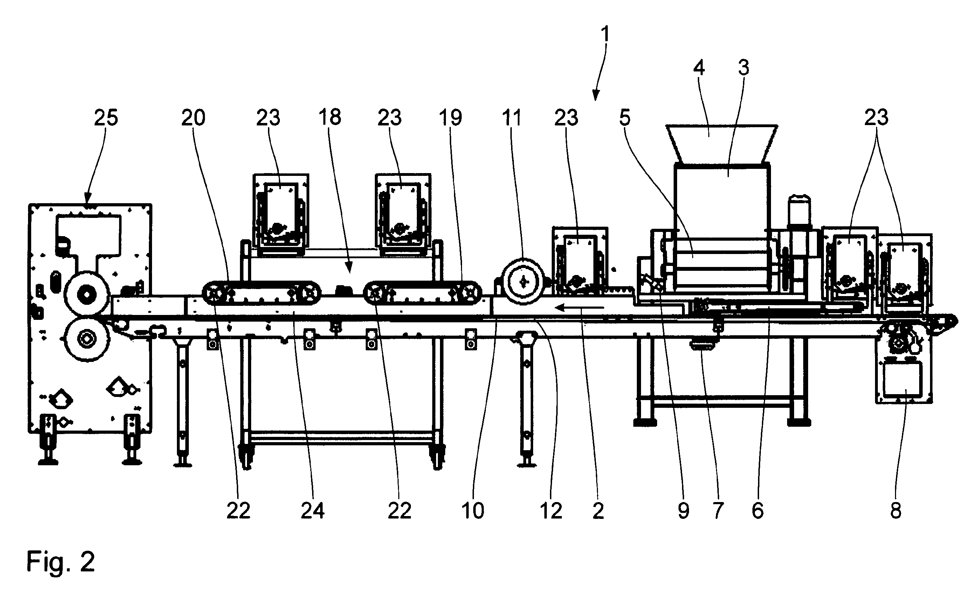

Fig. 1 und 2 zeigen eine Teigband-Erzeugungsvorrichtung 1. Eine Teig-Förderrichtung 2 verläuft in der Fig. 2 von rechts nach links.

Teig wird in einem Vorratsbehälter 3 vorgehalten, der über einen Trichter 4 von oben zum Beispiel manuell befüllt werden kann. Bei der Teigmasse handelt es sich um einen Weichteig, wie er zum Beispiel zur Herstellung von Ciabatta genutzt wird. Die im Vorratsbehälter 3 vorliegende Teigmasse wird mit Hilfe einer Portioniereinrichtung 5 in separate Teigportionen portioniert. Die Portioniereinrichtung 5 weist zur Portionierung der Teigmasse Dreiecks- oder Sternwalzen auf.

Ausgangsseitig, also unterhalb der Portioniereinrichtung 5, ist eine Zuführ-Fördereinrichtung 6 in Form eines über zwei Umlenkrollen umgelenkten Endlosbandes angeordnet. Die in der Fig. 2 linke der beiden Umlenkrollen der Zuführ-Fördereinrichtung 6 ist über einen Antriebsmotor 7 gesteuert angetrieben. Der Antriebsmotor 7 steht wie alle anderen mit dem Teig wechselwirkenden Komponenten der Vorrichtung 1 mit einer zentralen Steuereinrichtung 8 in Signalverbindung.

Am abgabeseitigen Ende der Zuführ-Fördereinrichtung 6, also im Bereich der mit dem Antriebsmotor 7 angetriebenen Umlenkrolle, liegt ein Erfassungsbereich einer Messeinrichtung 9 zum Messen eines Teigflusses auf der Zuführ-Fördereinrichtung 6, also der pro Zeiteinheit auf der Zuführ-Fördereinrichtung 6 geförderten Teigmenge. Bei der Messeinrichtung 9 handelt es sich um einen optischen Teigdickensensor, der zum berührungslosen Messen des Teigflusses ausgebildet ist.

Unter der Zuführ-Fördereinrichtung 6 und diese in der Förderrichtung 2 fortsetzend ist eine Anschluss-Fördereinrichtung 10 angeordnet. Hierbei handelt es sich um ein längs der gesamten Erstreckung der Vorrichtung 1 verlaufendes Endlos-Förderband, das einlaufseitig, also im Bereich eines in der Fig. 2 rechts dargestellten Endes, angetrieben und gespannt ist. Ein Obertrum der Anschluss-Fördereinrichtung 10 bewegt sich in der Fig. 2 in der Teig-Förderrichtung 2. Die Anschluss-Fördereinrichtung 10 führt die von der Zuführ-Fördereinrichtung 6 zugeführten Teigportionen zu nachfolgenden Teigbearbeitungsstationen der Vorrichtung 1.

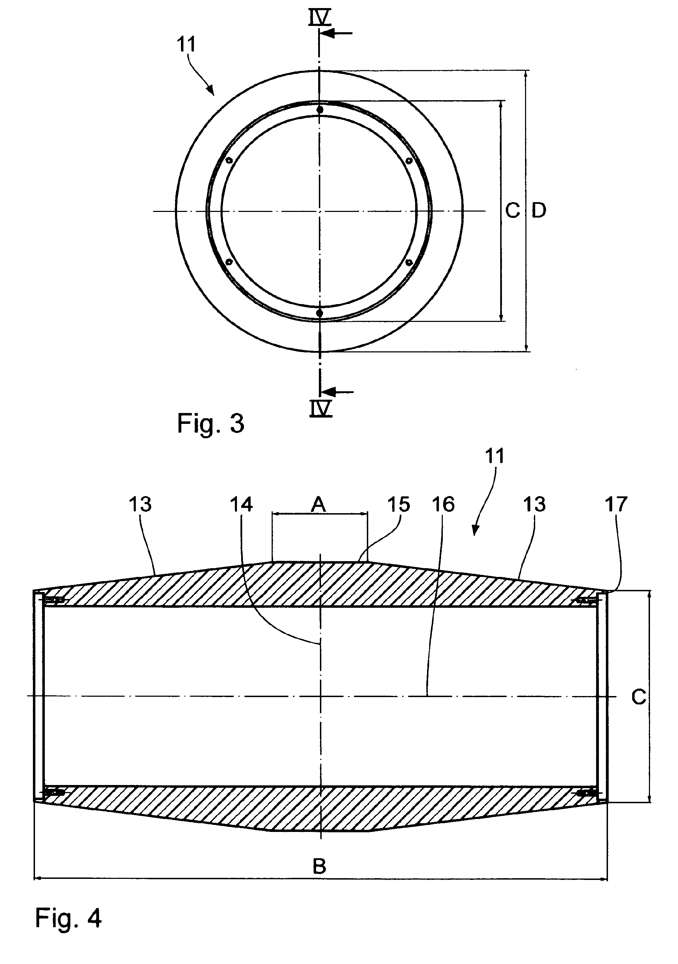

Der Zuführ-Fördereinrichtung 6 in der Teig-Förderrichtung 2 nachgeordnet ist eine Vordrückeinrichtung 11. Die Vordrückeinrichtung 11 ist über einen Motor 11 a in ihrer Rotationsgeschwindigkeit veränderlich steuerbar angetrieben. Die Vordrückeinrichtung 11 ist als Vordrückrolle ausgebildet, die die Teigportionen gegen einen planen Gegenkörper, nämlich gegen das durch eine Platte 12 unterstützte Obertrum der Anschluss-Fördereinrichtung 10 drückt. Die Vordrückeinrichtung 11 ist in den Fig. 3 und 4 vergrößert dargestellt. Die Vordrückeinrichtung 11 hat zwei sich konisch verjüngende Endabschnitte 13 und ist um eine mittlere Querschnittsebene 14 spiegelsymmetrisch. Zwischen den Endabschnitten 13 hat die Vordrückeinrichtung 11 einen zylindrischen Mittelabschnitt 15. Dieser hat eine Erstreckung A längs einer Rollenachse 16 der Vordrückeinrichtung 11, die um einen Faktor 6 geringer ist als eine Gesamterstreckung B der Vordrückeinrichtung 11 längs der Rollenachse 16. Auch andere Verhältnisse A/B sind möglich, zum Beispiel 1/3 bis 1/8.

Eine Rollendicke C der Vordrückeinrichtung 11 ist im Bereich eines Rollenendes 17 der Vordrückeinrichtung 11 um einen Faktor 1,3 geringer als eine Rollendicke D im Mittelabschnitt 15 der Vordrückeinrichtung 11. Auch andere Rollendickenverhältnisse D/C, zum Beispiel im Bereich zwischen 1,1 und 1,5, sind möglich.

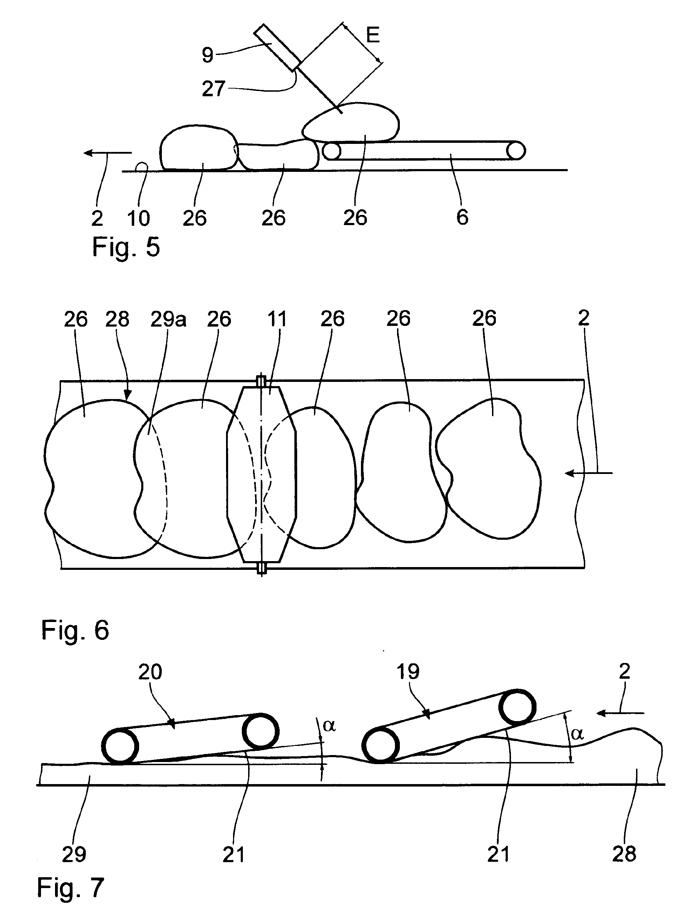

Der Vordrückeinrichtung 11 nachgeordnet ist eine Hauptandrückeinrichtung 18 zum Andrücken des durch die Vordrückeinrichtung 11 vorgedrückten Roh-Teigbandes zur Erzeugung des Teigbandes. Die Hauptandrückeinrichtung 18 hat zwei in der Förderrichtung 2 hintereinander angeordnete Hauptandrückeinheiten 19, 20. Diese dienen zum Andrücken des Roh-Teigbandes gegen das unterstützte Obertrum der Anschluss-Fördereinrichtung 10 in zwei Andrückstufen mit zwischen den Andrückstufen erfolgender Relaxation des Roh-Teigbandes. Die Hauptandrückeinheiten 19, 20 sind als um Umlenkrollen geführte Oberbänder ausgebildet. Jeweils eine der beiden Umlenkrollen jedes Oberbandes ist angetrieben. Ein Einlaufwinkel α (vgl. Fig. 7) von Untertrümmern 21 der Hauptandrückeinheiten 19, 20 zum Obertrum der Anschluss-Fördereinrichtung 10 ist einstellbar. Dies erfolgt durch Verschwenken der Hauptandrückeinheiten 19, 20 um Schwenkachsen 22, die mit den Rotationsachsen der jeweils stromabwärts gelegenen Umlenkrollen der Hauptandrückeinheiten 19, 20 zusammenfallen.

An der Einlaufseite der Anschluss-Fördereinrichtung 10, also noch stromaufwärts der Zuführ-Fördereinrichtung 6 gelegen, an der Einlaufseite der Zuführ-Fördereinrichtung 6, zwischen der Zuführ-Fördereinrichtung 6 und der Vordrückeinrichtung 11 sowie oberhalb der Hauptandrückeinheiten 19 und 20 hat die Vorrichtung 1 insgesamt fünf gleich aufgebaute Mehl-Streueinrichtungen 23 zum Bestreuen der Förderbänder sowie des Teigbandes mit Mehl.

Stromabwärts der Zuführ-Fördereinrichtung 10 hat die Vorrichtung 1 rechts und links der Anschluss-Fördereinrichtung 10 seitliche Führungsschienen 24, die eine Teig-Förderbahn im Bereich der Vordrückeinrichtung 11 und der Hauptdrückeinrichtung 18 seitlich begrenzen. Die Hauptandrückeinheiten 19, 20 haben quer zur Förderrichtung 2 eine Erstreckung, die dem Abstand zwischen den beiden seitlichen Führungsschienen 24 entspricht.

Das von der Vorrichtung 1 erzeugte kontinuierliche Teigband wird abgabeseitig der Anschluss-Fördereinrichtung einer weiteren Bearbeitung, insbesondere einem Satelliten-Walzwerk 25 zugeführt.

Unter zusätzlicher Bezugnahme auf die schematischen Figuren 5 bis 7 wird nachfolgend ein mit der Vorrichtung 1 durchgeführtes Verfahren zur Erzeugung eines kontinuierlichen Teigbandes erläutert: Mit der Portioniereinrichtung 5 wird die im Vorratsbehälter 3 vorgehaltene Teigmasse zunächst in separate Teigportionen 26 portioniert. Die Teigportionen 26 werden mit der Zuführ-Fördereinrichtung 6 der Anschluss-Fördereinrichtung 10 zugeführt. Dabei wird der Teigfluss auf der Zuführ-Fördereinrichtung 6 mit der Messeinrichtung 9 gemessen. Letztere misst über die Breite der Zuführ-Fördereinrichtung 6 einen Abstand E eines Sensorkopfes 27 der Messeinrichtung 9 zur Oberfläche der jeweils durch den Messbereich geführten Teigportion 26. Zusammen mit der Fördergeschwindigkeit der Zuführ-Fördereinrichtung 6 ist diese Messung des Abstandes E ein direktes Maß für den Teigfluss, den die Zuführ-Fördereinrichtung 6 der Anschluss-Fördereinrichtung 10 zuführt. Das Messergebnis der Messeinrichtung 9 wird der Steuereinrichtung 8 zugeführt. Letztere regelt über den Antriebsmotor 7 eine Fördergeschwindigkeit der Zuführ-Fördereinrichtung 6 derart, dass durch die Zuführ-Fördereinrichtung 6 an die Anschluss-Fördereinrichtung 10 ein Ist-Teigfluss abgegeben wird, der von einem Soll-Teigfluss nicht mehr als ein Vorgabewert abweicht. Durch Regelung der Fördergeschwindigkeit der Zuführ-Fördereinrichtung 6 wird also ein innerhalb gewisser Grenzen konstanter Teigfluss auf der Anschluss-Fördereinrichtung 10 erzwungen. Dieser Teigfluss wird auf einen Wert eingestellt, bei dem die Teigportionen 26 dicht aneinander liegen bzw., wie in der Fig. 5 bei den beiden linken Teigportionen 26 angedeutet, miteinander überlappen. Dieser Prozess kann ebenso durch exakte Teigportionen innerhalb eines immer wiederkehrenden, gleichen Zeitfensters erfolgen. In diesem Fall wird durch die Portioniereinrichtung 5 ein konstanter Teigfluss sichergestellt. Die so teigfluss-geregelten Teigportionen 26 werden dann mit der Vordrückeinrichtung 11 zur Herstellung eines Roh-Teigbandes 28 vorgedrückt. Beim Vordrücken werden Portionsüberlappungen zwischen den Teigportionen 26 in vorgegebener Weise gestaucht oder gezogen, während das Fließverhalten des Teiges nach außen, also hin zu den seitlichen Führungsschienen 24, unterstützt wird. Nach dem Vordrücken ist ein Überlappen zwischen benachbarten Teigportionen 26 in Bereichen 29a (vgl. Fig. 6) hergestellt. Anschließend wird das vorgedrückte Roh-Teigband 28 mit der Hauptandrückeinrichtung 18, also mit den Hauptandrückeinheiten 19, 20 zur Erzeugung eines kontinuierlichen Teigbandes 29 angedrückt. Nach dem Andrücken durch die zweite Andrückeinheit 20 verläuft das Teigband 29 beiderseits bis zu den Führungsschienen 24. Zwischen dem Andrücken in zwei Andrückstufen durch die Hauptandrückeinheiten 19, 20 erfolgt eine Relaxation des Roh-Teigbandes 28.

Der Einlaufwinkel α der ersten Hauptandrückeinheit 19 ist, wie in der Fig. 7 schematisch angedeutet, größer als der Einlaufwinkel α der zweiten Hauptandrückeinheit 20. Hierdurch ist sichergestellt, dass mit der Hauptandrückeinheit 19 das dort noch wesentlich unebener vorliegende Roh-Teigband 28 sauber angedrückt werden kann.

Die Hauptandrückeinheiten 19, 20 haben im Wesentlichen eine Haltefunktion für das Roh-Teigband 28. Durch diesen Halteprozess wird das Fließverhalten des Rohr-Teigbandes 28 so beeinflusst, dass restliche Lücken, die vor allem an den Stößen des Roh-Teigbandes 28 zwischen den Teigportionen 26 auftreten, geschlossen werden.

## Patentansprüche

1. Verfahren zur Erzeugung eines kontinuierlichen Teigbandes (29) mit folgenden Schritten:
- Portionieren einer Teigmasse in separate Teigportionen (26),
- Zuführen der Teigportionen (26) mit einer Zuführ-Fördereinrichtung (6) hin zu einer Anschluss-Fördereinrichtung (10), die die Teigportionen (26) hin zu mindestens einer nachfolgenden Teigbearbeitungsstation (11, 18) führt,
- Messen eines Teigflusses auf der Zuführ-Fördereinrichtung (6), also der pro Zeiteinheit auf der Zuführ-Fördereinrichtung (6) geförderten Teigmenge,
- Regeln einer Fördergeschwindigkeit der Zuführ-Fördereinrichtung (6) derart, dass an die Anschluss-Fördereinrichtung (10) ein Ist-Teigfluss abgegeben wird, der von einem Soll-Teigfluss nicht mehr als ein Vorgabewert abweicht,
- Vordrücken der geregelt geförderten Teigportionen (26) mit einer Vorandrückeinrichtung (11) zur Herstellung eines Roh-Teigbandes (28),
- Andrücken des vorgedrückten Roh-Teigbandes (28) mit einer Hauptandrückeinrichtung (18) zur Erzeugung des kontinuierlichen Teigbandes (29).

2. Verfahren nach Anspruch 1, **dadurch gekennzeichnet, dass** das Messen durch einen Teigdickensensor (9) erfolgt.

3. Verfahren nach Anspruch 2, **dadurch gekennzeichnet, dass** das Messen des Teigflusses berührungslos erfolgt.

4. Verfahren nach einem der Ansprüche 1 bis 3, **dadurch gekennzeichnet, dass** das Andrücken in mindestens zwei Andrückstufen (19, 20) mit zwischen den Andrückstufen (19, 20) erfolgender Relaxation des Roh-Teigbandes (28) erfolgt.

5. Vorrichtung (1) zur Erzeugung eines kontinuierlichen Teigbandes (29),
- mit einer Portioniereinrichtung (5) zum Portionieren einer Teigmasse in separate Teigportionen (26),
- mit einer Zuführ-Fördereinrichtung (6),
- mit einer Anschluss-Fördereinrichtung (10), die die von der Zuführ-Fördereinrichtung (6) zugeführten Teigportionen (26) zu mindestens einer nachfolgenden Teigbearbeitungsstation (11, 18) führt,
- mit einer Messeinrichtung (9) zum Messen eines Teigflusses auf der Zuführ-Fördereinrichtung (6), also der pro Zeiteinheit auf der Zuführ-Fördereinrichtung (6) geförderten Teigmenge,
- mit einer Steuer-/Regeleinrichtung (8), die mit einem Förderantrieb (7) der Zuführ-Fördereinrichtung (6) zum Regeln einer Fördergeschwindigkeit der Zuführ-Fördereinrichtung (6) derart zusammenwirkt, dass an die Anschluss-Fördereinrichtung (10) ein Ist-Teigfluss abgegeben wird, der von einem Soll-Teigfluss nicht mehr als ein Vorgabewert abweicht,
- mit einer Vordrückeinrichtung (11) zum Vordrücken der geregelt geförderten Teigportionen (26) zur Herstellung eines Roh-Teigbandes (28),
- mit einer Hauptandrückeinrichtung (18) zum Andrücken des vorgedrückten Roh-Teigbandes (28) zur Erzeugung des kontinuierlichen Teigbandes (29).

6. Vorrichtung nach Anspruch 5, **gekennzeichnet durch** einen Teigdickensensor (9) als Messeinrichtung.

7. Vorrichtung nach Anspruch 6, **dadurch gekennzeichnet, dass** die Messeinrichtung (9) zum berührungslosen Messen des Teigflusses ausgebildet ist.

8. Vorrichtung nach einem der Ansprüche 5 bis 7, **dadurch gekennzeichnet, dass** die Vordrückeinrichtung (11) als Vordrückrolle ausgebildet ist, die die Teigportionen gegen einen planen Gegenkörper (10, 12) drückt.

9. Vorrichtung nach Anspruch 8, **dadurch gekennzeichnet, dass** die Vordrückrolle (11) sich insbesondere konisch verjüngende Endabschnitte (13) aufweist.

10. Vorrichtung nach Anspruch 9, **dadurch gekennzeichnet, dass** ein zwischen den Endabschnitten (13) gelegener zylindrischer Mittelabschnitt (15) der Vordrückrolle (11) eine Erstreckung (A) längs der Rollenachse (16) hat, die um einen Faktor 3 bis 8, insbesondere um einen Faktor 6, geringer ist als die Gesamterstreckung (B) der Vordrückrolle (11) längs der Rollenachse (16).

11. Vorrichtung nach Anspruch 9 oder 10, **dadurch gekennzeichnet, dass** eine Rollendicke (C) im Bereich eines Rollenendes (17) der Vordrückrolle (11) um einen Faktor 1,1 bis 1,5, insbesondere um einen Faktor 1,3, geringer ist als einen Rollendicke (D) im Mittelabschnitt (15) der Vordrückrolle (11).

12. Vorrichtung nach einem der Ansprüche 5 bis 11, **dadurch gekennzeichnet, dass** die Hauptandrückeinrichtung (18) mindestens zwei Hauptandrückeinheiten (19, 20) zum Andrücken des Roh-Teigbandes (28) in zwei Andrückstufen mit zwischen den Andrückstufen erfolgender Relaxation des Roh-Teigbandes (28) umfasst.

13. Vorrichtung nach Anspruch 12, **dadurch gekennzeichnet, dass** die Hauptandrückeinheiten (19, 20) als um Umlenkrollen geführte Oberbänder ausgeführt sind.

14. Vorrichtung nach Anspruch 13, **dadurch gekennzeichnet, dass** die Oberbänder um eine der Umlenkrollen schwenkbar (22) ausgeführt sind.

15. Vorrichtung nach einem der Ansprüche 5 bis 14, **gekennzeichnet durch** seitliche Führungsschienen (24), die eine Teig-Förderbahn im Bereich der Vordrückeinrichtung (11) und der Hauptandrückeinrichtung (18) seitlich begrenzen.
